# EUROPÄISCHE PATENTANMELDUNG

(11) **EP 1 744 422 A1**
(43) Veröffentlichungstag der Anmeldung: **17.01.2007**
(21) Anmeldenummer: 06014183.5
(22) Anmeldetag: 07.07.2006
(51) Int. Cl.: H02B 1/30

(54) **Zähler- oder/und Verteilerschrank**

(30) Priorität: 11.07.2005 DE 102005032895
(71) Anmelder: Hager Electro GmbH, 66131 Saarbrücken (DE)
(72) Erfinder: Noll, Jürgen, 66440 Blieskastel (DE)
(74) Vertreter: Bernhardt, Reinold

(57) **Zusammenfassung**

Die Erfindung betrifft einen Zähler- oder/und Verteilerschrank mit einem Schrankgehäuse (2) aus Blech und einer Innenauskleidung des Schrankgehäuses (2) aus isolierendem Material, wobei das Schrankgehäuse (2) eine Öffnung (3,4) für die Durchführung von Leitern aufweist, welche durch eine Platte (5,6) verschließbar ist. Gemäß der Erfindung ist die Oberfläche der Platte (5,6) wenigstens auf der Innenseite durch ein isolierendes Material gebildet und die Innenauskleidung weist eine zu der Öffnung in dem Schrankgehäuse ausgerichtete Öffnung (9) auf.

## Beschreibung

Die Erfindung betrifft einen Zähler- oder/und Verteilerschrank mit einem Schrankgehäuse aus Blech und einer Innenauskleidung des Schrankgehäuses aus isolierendem Material, wobei das Schrankgehäuse eine Öffnung in einer Seitenwand für die Durchführung von Leitern aufweist, welche durch eine Platte verschließbar ist.

Zähler- oder/und Verteilerschränke mit Außenwänden aus Blech benötigen eine isolierende Innenauskleidung, damit keine Möglichkeit besteht, dass spannungsführende Teile mit der leitenden Schrankaußenwand in Berührung kommen. Bei Nutzung der genannten Öffnung zum Durchführen von Leitern durch die Schrankwand wird herkömmlich zur Bildung einer entsprechenden Durchführungsöffnung in der Innenauskleidung ein Abschnitt aus der Innenauskleidung herausgeschnitten.

Der Erfindung liegt die Aufgabe zugrunde, einen neuen Zähler- oder/und Verteilerschrank der eingangs erwähnten Art zu schaffen, bei welchem die Durchführung von Kabeln durch eine Seitenwandöffnung hindurch erleichtert ist.

Der diese Aufgabe lösende Zähler- und Verteilerschrank nach der Erfindung ist dadurch gekennzeichnet, dass die Oberfläche der Verschlussplatte auf deren Innenseite durch ein isolierendes Material gebildet und die Innenauskleidung eine zu der Öffnung in der Seitenwand ausgerichtete Öffnung aufweist.

Erfindungsgemäß übernimmt die wenigstens innenseitig durch ein isolierendes Material gebildete Verschlussplatte im Bereich der Öffnung der Innenauskleidung die Isolation. Das Ausschneiden eines Abschnitts aus der Innenauskleidung kann entfallen.

in einer besonders bevorzugten Ausführungsform der Erfindung weist die Innenauskleidung Schwachstellen für die Abtrennung eines an die Öffnung angrenzenden Abschnitts auf, wobei durch Abtrennung dieses Abschnitts eine zu der Öffnung in der Seitenwand deckungsgleiche Öffnung in der Innenauskleidung herstellbar ist.

Ein solcher Abschnitt kann in einem Bereich der Öffnung angeordnet sein, welcher nicht durch Inneneinbauten mit isolierenden Vorderwänden abgedeckt ist. Vorteilhaft schließt dieser Abschnitt die Möglichkeit aus, durch die Öffnung in der Innenauskleidung hindurch seitlich an den Einbauten vorbei an spannungsführende Teile zu gelangen. Bei Verwendung von Inneneinbauten, welche die (erweiterte) Öffnung vollständig verschließen, kann vorteilhaft der Abschnitt ausgebrochen und der gesamte Öffnungsquerschnitt genutzt werden.

In vorteilhafter Ausgestaltung der Erfindung können ferner Schwachstellen zum Abtrennen wenigstens eines Teilstücks von dem Abschnitt vorgesehen sein. Vorteilhaft bestehen somit erweiterte Variationsmöglichkeiten in bezug auf die Verwendung unterschiedlicher Inneneinbauten.

An dem Abschnitt oder/und das Teilstück können ein Herausbrechen erleichternde Griffbereiche angeformt sein.

Weitere Ausgestaltungsmöglichkeiten der Erfindung gehen aus den Unteransprüchen hervor.

Die Erfindung wird nachfolgend anhand eines Ausführungsbeispiels und der beiliegenden, sich auf dieses Ausführungsbeispiel beziehenden Zeichnungen näher erläutert. Es zeigen:

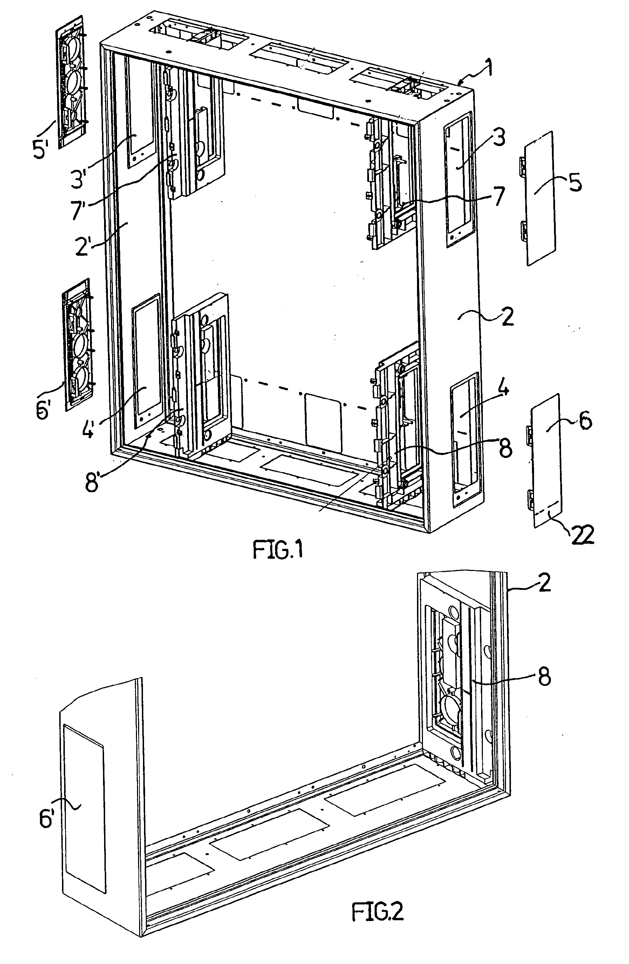

- Fig. 1: einen erfindungsgemäßen Zähler- und Verteilerschrank in einer Explosionsdarstellung,
- Fig. 2: einen unteren Teil des Zählerschranks von Fig. 1,
- Fig. 3: ein Element zur Bildung einer Innenauskleidung für den Zählerschrank von Fig. 1 und 2,
- Fig. 4: einen unteren Eckenbereich des Schranks von Fig. 1, und
- Fig. 5: ein Element zur Verbindung zweier Schränke nach Fig. 1.

Ein Zähler- und Verteilerschrank weist ein Schrankgehäuse 1 aus Blech auf. In jeder der beiden Seitenwände 2 und 2' des Schrankgehäuses sind Öffnungen 3 und 4 bzw. 3' und 4' gebildet, welche durch Platten 5 und 6 bzw. 5' und 6' verschließbar sind.

Die Bezugszeichen 7 und 8 sowie 7' und 8' weisen auf Elemente zur Bildung einer isolierenden Innenverkleidung des Schrankgehäuses 1 hin.

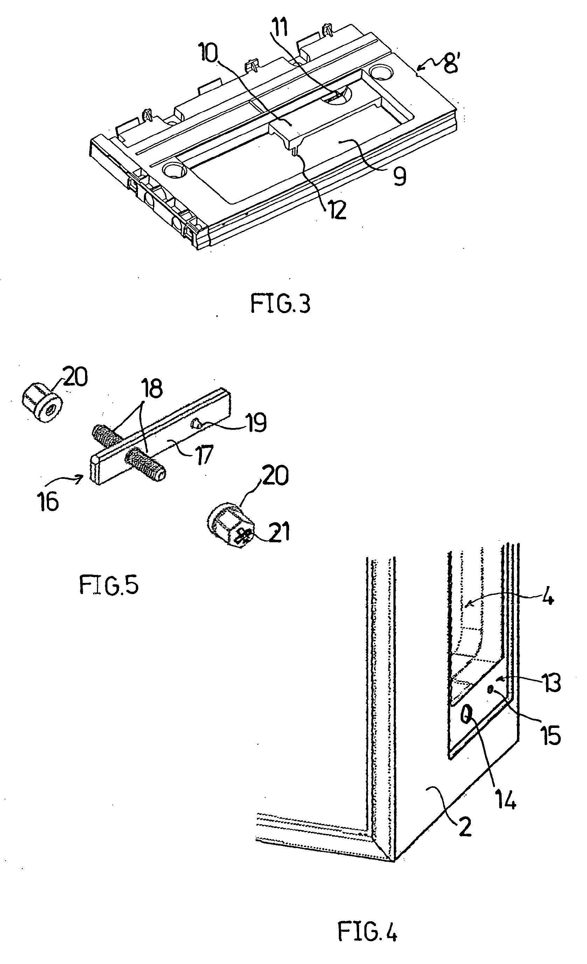

Wie Fig. 3, welche beispielhaft das Element 8' zeigt, zu entnehmen ist, weist jedes der Elemente 7,8,7',8' eine Öffnung 9 auf. Die Querschnittsfläche der Öffnung entspricht in Größe, Form und Anordnung etwa derjenigen der jeweiligen Öffnung 3,4,3',4' in der angrenzenden Seitenwand 2 bzw. 2'. Ein Abschnitt 10 schließt einen Teil der rechteckigen Öffnung 9 ab. Verbindungen zwischen dem Abschnitt 10 und dem übrigen Element sind als Schwachstelle ausgebildet, so dass sich der Abschnitt 10 leicht ausbrechen und die rechteckige Öffnung 9 vollständig freigeben lässt.

Der Abschnitt 10 weist eine Öffnung 11 auf, durch welche ein Zugang zu einem Verriegelungselement der Verschlussplatte gebildet ist. Ein Stützfuß 12, welcher gegen die betreffende Verschlussplatte 5,6,5',6' anliegt, verhindert versehentliches Ausbrechen des Abschnitts 10. Bei Inneneinbauten, welche den Abschnitt 10 freiliegen lassen, den übrigen Teil der Öffnung 9 jedoch abdecken, muss der Abschnitt 10 verbleiben, um zu verhindern, dass durch die Öffnung 9 hindurch seitlich an den Einbauten vorbei eine Berührung spannungsführender Teile möglich ist. Bei Verwendung von Einbauten, welche den gesamten Rechteckbereich der Öffnung 9 abdecken, kann der Abschnitt 10 ausgebrochen werden, um die gesamte Querschnittsfläche der Öffnung 9 zu nutzen.

Wie aus Fig. 4 hervorgeht, sind die Öffnungen 3,4,3',4' jeweils innerhalb einer nach außen offenen Einsenkung 13 in der Seitenwand 2,2' gebildet. Diese Einsenkungen können vollständig durch die jeweiligen Abdeckungen 5,6,5',6' ausgefüllt werden, deren Dicke gleich der Tiefe der Einsenkung ist und die daher bündig mit der äußeren Oberfläche der Seitenwand 2,2' des Schranks abschließt.

Wie Fig. 4 ferner erkennen lässt, sind in einem unteren Abschnitt der Einsenkung 13 weitere, durch das Blech der Seitenwand 2 durchgehende Öffnungen 14 und 15 gebildet. Unter Nutzung dieser Öffnungen und mit Hilfe von Verbindungselementen gemäß Fig. 5 lassen sich Schränke an ihren Seitenwänden 2,2' miteinander verbinden.

Fig. 5 zeigt ein Verbindungselement 16 mit einem länglichen, streifenartigen Mittelstück 17, von dem in entgegengesetzten Richtungen Gewindebolzen 18 vorstehen. Die Dicke des Mittelstücks in Richtung der Drehachse der Gewindebolzen 18 entspricht der zweifachen Tiefe der Einsenkung 13. Von dem Mittelstück stehen im Abstand zu den Gewindebolzen 18 ferner in entgegengesetzten Richtungen Zapfen 19 vor.

Zur Verbindung zweier Schränke werden die Gewindebolzen 18 in einander gegenüberliegende Öffnungen 14 und die Zapfen 19 in einander gegenüberliegende Öffnungen 15 miteinander zu verbindender Schränke eingeführt. Auf die aus der Öffnung 14 ins Schrankinnere vorstehenden Gewindebolzen 18 werden Überwurfmuttern 20 aufgeschraubt. Das Mittelstück füllt den durch die einander gegenüberliegenden Einsenkungen 13 gebildeten Zwischenraum zwischen den Schränken aus und bildet ein Widerlager für die Überwurfmuttern 20, welches Verformungen des Bleches der Seitenwände 2,2' durch die Schraubverbindung verhindert.

Wie Fig. 5 erkennen lässt, sind die Muttern 13 nicht nur durch einen Schraubenschlüssel drehbar, sondern weisen auch Einschlitzungen 21 für den Eingriff eines Schraubendrehers auf.

In Projektion auf die Seitenwand 2,2' zwischen der jeweiligen Öffnung 3,4,3',4' und den Öffnungen 14 und 15 verläuft in der Abdeckung 5,6,5',6' eine Sollbruchlinie 22, welche es ermöglicht, ein Endstück derart abzubrechen, dass lediglich die Öffnungen 14 und 15 freigegeben sind. Soll keine Durchführung von Leitungen erfolgen, so kann der Rest der Abdeckung in der Einsenkung 13 verbleiben.

## Patentansprüche

1. Zähler- oder/und Verteilerschrank mit einem Schrankgehäuse (1), aus Blech und einer Innenauskleidung des Schrankgehäuses aus isolierendem Material, wobei das Schrankgehäuse (1) in einer Seitenwand (2) eine Öffnung (3,4) für die Durchführung von Leitern aufweist, welche durch eine Platte (5,6) verschließbar ist,
**dadurch gekennzeichnet,**
**dass** die Oberfläche der Verschlussplatte (5,6) wenigstens auf deren Innenseite durch ein isolierendes Material gebildet ist und die Innenauskleidung eine zu der Öffnung in der Seitenwand (2) ausgerichtete Öffnung aufweist.

2. Schrank nach Anspruch 1,
**dadurch gekennzeichnet,**
**dass** die Innenauskleidung Schwachstellen zur Abtrennung eines an die Öffnung angrenzenden Abschnitts (10) aufweist, wobei durch Abtrennung des Abschnitts (10) eine zu der Öffnung in der Seitenwand deckungsgleiche Öffnung in der Innenauskleidung herstellbar ist.

3. Schrank nach Anspruch 2,
**dadurch gekennzeichnet,**
**dass** ferner Schwachstellen zum Abtrennen wenigstens eines Teilstücks von dem Abschnitt vorgesehen sind.

4. Schrank nach Anspruch 2 oder 3,
**dadurch gekennzeichnet,**
**dass** an dem Abschnitt oder/und dem Teilstück die Abtrennung erleichternde Griffbereiche gebildet sind.

5. Schrank, nach einem der Ansprüche 1 bis 4,
**dadurch gekennzeichnet, dass** zusätzlich zu der Öffnung (3,4) wenigstens eine weitere Öffnung (14,15) für die Einführung eines den Schrank mit einem weiteren Schrank verbindenden Elements (16) vorgesehen ist, wobei die Öffnung (3,4) und die weitere Öffnung (14,15) innerhalb einer nach außen offenen Einsenkung (13) in der Seitenwand (2) gebildet und die Platte (5,6,5',6') in die Einsenkung (5) einsetzbar ist.

6. Schrank nach Anspruch 5,
**dadurch gekennzeichnet,**
**dass** die Platte (5,6) die Einsenkung (13) ausfüllt.

7. Schrank nach Anspruch 5 oder 6,
**dadurch gekennzeichnet,**
**dass** die Platte (5,6) bündig mit der äußeren Oberfläche der Seitenwand (2) des Schrankes abschließt.

8. Schrank nach einem der Ansprüche 5 bis 7,
**dadurch gekennzeichnet,**
**dass** die Platte (5,6) eine Sollbruchlinie (22) aufweist, welche, in Projektion auf die Seitenwand (2), zwischen der Öffnung (14,15) für die Einführung des Verbindungselements (16) und der Öffnung (3, 4) für die Durchführung von Leitern verläuft.

9. Schrank nach einem der Ansprüche 5 bis 8,
**dadurch gekennzeichnet,**
**dass** das Verbindungselement (14) einen zum Eingriff in die Einsenkung (13) vorgesehenen Mittelabschnitt (17) mit einer der zweifachen Tiefe der Einsenkung (18) entsprechenden Dicke aufweist.

10. Schrank nach Anspruch 9,
**dadurch gekennzeichnet,**
**dass** von dem Mittelstück (17) in entgegengesetzten Richtungen Gewindeansätze (18) zur Einführung in die betreffenden Öffnungen (14,15) miteinander zu verbindender Schränke vorstehen.
